# EUROPEAN PATENT APPLICATION

(11) **EP 2 244 177 A2**
(43) Date of publication of application: **27.10.2010**
(21) Application number: 10160415.5
(22) Date of filing: 20.04.2010
(51) Int. Cl.: G06F 3/048

(54) **Method for processing multi-touch input in mobile device**

(30) Priority: 21.04.2009 KR 20090034786
(71) Applicant: Samsung Electronics Co., Ltd., Suwon-si, Gyeonggi-do (KR)
(72) Inventor: Cho, Young Ho, Suwon-si, Gyeonggi-do (KR); Kim, Dong Sub, Suwon-si, Gyeonggi-do (KR); Kim, Hak Yeol, Suwon-si, Gyeonggi-do (KR); Kim, Phil Jun, Suwon-si, Gyeonggi-do (KR)
(74) Representative: Ketelaars, Maarten F.J.M.

(57) **Abstract**

A method for processing a multi-touch input for a mobile device having a touch screen of a resistive overlay type which is normally incapable of recognizing a multi-touch input. A first data based on a first touch is displayed and a second touch is detected while the first touch is maintained. An intermediate data unexpectedly occurring between the first and second touches is treated as invalid data and removed when one of the first and second touches is released. Then a second data based on the second touch is displayed. This method makes it possible to properly recognize a multi-touch input through software-based technique, while reducing unexpected input errors caused by a multi-touch input and thus permitting a user's quick input action.

## Description

### BACKGROUND OF THE INVENTION

### Field of the Invention

The present invention relates in general to a touch-based input technology in mobile devices. More particularly, the present invention relates to a method for processing a multi-touch input in a mobile device.

### Description of the Related Art

With the dramatic advances in communication technologies, the advent of new techniques and functions in mobile devices has steadily aroused customers' interest. In addition, various approaches to user-friendly interfaces have been introduced in the field of mobile devices. Particularly, many mobile devices employ a touch screen as their input instead of or in addition to a traditional keypad.

The touch screen is one of input devices that serves as an interface between a human operator and an electronic device having or needing a display unit. Normally, such a touch screen allows a user to directly touch a screen surface through any input tool such as a finger or a stylus pen, thus realizing an interaction between a user and an electronic device. Since a user can easily and intuitively manipulate the touch screen by using an input tool, the touch screen has been widely employed for many electronic devices such as an automated teller machines (ATM), a personal digital assistant (PDA), a cellular phone, etc., in various fields such as a bank, a public office, a tourist bureau, etc.

The touch screen may adopt several types including a resistive overlay type, a capacitive overlay type, a surface acoustic wave type, an infrared beam type, etc. Nowadays most mobile devices having a touch screen use the resistive overlay type because of some advantages such as relatively lower cost and acceptability of various input tools.

However, the touch screen of a resistive overlay type has a serious drawback that it allows processing only a single touch event at a time. In other words, the touch screen of a resistive overlay type cannot recognize inherently a simultaneous multi-touch event occurring thereon. Specifically, when a user touches a second touch point without or before releasing a finger from a first touch point, the touch screen of a resistive overlay type fails to recognize a multi-touch event, or mistakenly recognizes a touch as being detected in any other point (e.g., an intermediate point between the first and second touch points). This problem becomes more apparent when a user quickly inputs letters and numbers through a virtual keypad displayed on the touch screen.

### BRIEF SUMMARY OF THE INVENTION

Accordingly, the present invention addresses the above-mentioned problems and/or disadvantages and provides at least the advantages described herein below.

An exemplary aspect of the present invention is to provide a method for preventing a mistaken recognition of a touch-based user input in a mobile device having a touch screen.

Another exemplary aspect of the present invention is to provide a method for preventing unexpected input errors due to a multi-touch in a touch screen comprised of a resistive overlay type which is incapable of recognizing a simultaneous multi-touch.

Still another exemplary aspect of the present invention is to provide a method for eliminating a mistaken recognition of an overlap part of continuous touch inputs in a touch screen of a resistive overlay type.

Yet another exemplary aspect of the present invention is to provide a method for allowing quick, continuous and reliable touch inputs by properly processing a transiently and partly overlapped multi-touch input when a touch screen of a resistive overlay type is used.

According to one exemplary aspect of the present invention, provided is a method for processing a multi-touch input, the method comprising: displaying a first data associated with detecting a first touchdown of a touch screen; detecting a second touchdown while the first touchdown is maintained; determining an intermediate data generated on a basis of an overlapping of the first touchdown and the second touchdown to be invalid data, the intermediate data unexpectedly occurring between the first touchdown and the second touchdown; removing the invalid data when a first one of the first touchdown and the second touchdown is released; and displaying a second data based on the second touchdown.

According to another exemplary aspect of the present invention, provided is a method for processing a multi-touch input in a touch screen, the method comprising: displaying a first data based on a first touchdown while storing the first data in a first buffer; storing a second data in a second buffer, the second data being based on a second touchdown inputted while the first touch is maintained; storing a third data in a third buffer, the third data being based on a third touchdown inputted while one of the first touchdown and the second touchdown is maintained; by using both the first data in the first buffer and the third data in the third buffer, determining whether the second data in the second buffer is valid or invalid; if the second data is valid, displaying the second data and then shifting data in both the second buffer and the third buffer; and if the second data is invalid, removing the second data and then shifting data in the third buffer.

In some exemplary aspects of the present invention, the first data may be stored in a first buffer and displayed as valid data, and the invalid data may be stored in a second buffer. Also, the second data may be stored in a third buffer, and the second data in the third buffer may be shifted to the second buffer after the invalid data is removed.

In some exemplary aspects of the present invention, the touch screen comprises a resistive overlay touch screen, and wherein the removal of the invalid data includes resetting the second buffer.

In some exemplary aspects of the present invention, the method may further comprise initializing the first, second and third buffers when a second one of the first touchdown and the second touchdown is released after the second data is stored in the third buffer.

In some exemplary aspects of the present invention, the treating of the intermediate data as the invalid data may include distinguishing the invalid data from valid data by creating a virtual touchup event and a virtual touchdown event.

In some exemplary aspects of the present invention, the first data may be displayed in response to the first touchdown comprising a real touchdown event, and the virtual touchup event and the virtual touchdown event may be created when the second touchdown is detected while the first touchdown is maintained. Also, an input of the first data may be completed in response to the virtual touchup event, and the invalid data may occur in response to the virtual touchdown event.

In some exemplary aspects of the present invention, the virtual touchup event and the virtual touchdown event may be further created when one of the first touchdown and the second touchdown is released. Also, the invalid data may be removed in response to the further created virtual touchup event, and the second data may be treated as the valid data and displayed in response to the further created virtual touchdown event.

In some exemplary aspects of the present invention, the method may further comprise creating a real touchup event when both of the first touchdown and the second touchdown are released, wherein an input of the second data is completed in response to the real touchup event.

In some exemplary aspects of the present invention, the second data may be shifted to the first buffer after the invalid data is removed and after the second data is treated as the valid data.

In some exemplary aspects of the present invention, the intermediate data may occur between a touch point of the first touchdown and a touch point of the second touchdown when the second touchdown is detected while the first touch is maintained.

In some exemplary aspects of the present invention, the method may further comprise, after one of the first touchdown and the second touchdown is released, detecting a third touchdown on a released point; and determining a third data based on the third touch as invalid data or valid data depending on particular setting conditions.

In some exemplary aspects of the present invention, the method may further comprise initializing the first, second and third buffers when both of the first touch and the second touch are released.

In some exemplary aspects of the present invention, the method may further comprise creating a real touchdown event in response to the first touchdown; distinguishing the invalid data from valid data by creating a virtual touchup event and a virtual touchdown event when the second touchdown is detected while the first touch is maintained; and creating a real touchup event when both of the first touchdown and the second touchdown are released.

In some exemplary aspects of the present invention, the method may further comprise, determining whether data stored in the second buffer is valid or invalid by using both the first data in the first buffer and the second data in the third buffer.

In some exemplary aspects of the present invention, the method may further comprise, if the data stored in the second buffer is invalid, removing/erasing the invalid data from the second buffer; and if the data stored in the second buffer is valid performing an event processing with the data in the second buffer.

In some exemplary aspects of the present invention, the determining whether the data stored in the second buffer is valid or invalid may include determining an event type and a buffer state.

In some exemplary aspects of the present invention, the determining of the event type and the buffer state may include: if the event type is not a touchup event and the first, second and third buffers are in a full state, determining whether the data in the second buffer is valid or invalid by using data in the first buffer and data in the third buffer; if the data in the second buffer is invalid, removing the data in the second buffer as invalid data; and if the data in the second buffer is valid, displaying the data in the second buffer as valid data.

In some exemplary aspects of the present invention, the determining of the event type and the buffer state may include: if the event type is a touchup event and the first, second and third buffers are in a full state, determining whether the data in the second buffer is valid or invalid by using data in the first buffer and data in the third buffer; if the data in the second buffer is invalid, removing the data in the second buffer as invalid data and then shifting the data in the third buffer; and if the data in the second buffer is valid, displaying the data in the second buffer as valid data and then shifting both the data in the second buffer and the data in the third data.

In some exemplary aspects of the present invention, the determining of the event type and the buffer state may further include: if the data in the third buffer comprises the intermediate data, removing the data in the third buffer as invalid data; and if the data in the third buffer does not comprise the intermediate data, displaying the data in the third buffer as valid data.

In some exemplary aspects of the present invention, the determining of the event type and the buffer state may further include: if the event type is a touchup event and the first and third buffers are in a full state, analyzing the data in the second buffer; if the data in the second buffer is the intermediate data, removing the data in the second buffer as invalid data; and if the data in the second buffer is not the intermediate data, displaying the data in the second buffer as valid data.

Other exemplary aspects, advantages, and salient features of the present invention will become apparent to those skilled in the art from the following detailed description, which, taken in conjunction with the annexed drawings, discloses exemplary embodiments of the present invention.

### BRIEF DESCRIPTION OF THE DRAWINGS

FIG. 1 is a conceptualized view which illustrates the output of event data in a case where two points are simultaneously touched in a conventional mobile device having a touch screen of a resistive overlay type.
FIGS. 2a and 2b are conceptualized views which illustrate the output of event data in a case where two points are simultaneously touched in a mobile device in accordance with an exemplary embodiment of the present invention.
FIG. 3 is a flow diagram which illustrates a method for processing a multi-touch input in a mobile device in accordance with an exemplary embodiment of the present invention.
FIG. 4 illustrates a process of a multi-touch input on a touch screen of a resistive overlay type in accordance with an exemplary embodiment of the present invention.
FIG. 5 illustrates a process of a multi-touch input on a touch screen of a resistive overlay type in accordance with an exemplary embodiment of the present invention.
FIG. 6 illustrates some examples of the configuration of a multi-touch input wherein valid data and invalid data are distinguished by virtual events in accordance with an exemplary embodiment of the present invention.
FIG. 7 illustrates a method for processing a multi-touch input in a mobile device in accordance with another exemplary embodiment of the present invention.
FIGS. 8a and 8b illustrate a process of a multi-touch input on a touch screen of a resistive overlay type in accordance with another exemplary embodiment of the present invention.
FIGS. 9a and 9b are flow diagrams which illustrate a method for processing an event in connection with FIGS. 8a and 8b.
FIG. 10 is a flow diagram which illustrates a method for analyzing valid data and invalid data in connection with FIGS. 8a to 9b.
FIG. 11 is an example view which illustrates a method for analyzing valid data and invalid data in connection with FIGS. 8a to 9b.

### DETAILED DESCRIPTION

Exemplary, non-limiting embodiments of the present invention will now be described more fully with reference to the accompanying drawings. The present invention may, however, be embodied in many different forms and the appended claims are not limited to the exemplary embodiments set forth herein. Rather, the disclosed exemplary embodiments are provided so that this disclosure will be thorough so as to convey the scope of the invention to those skilled in the art. The principles and features of the present invention may be employed in varied and numerous exemplary embodiments without departing from the scope of the invention.

Furthermore, well-known or widely used techniques, elements, structures, and processes may not be described or illustrated in detail to avoid obscuring appreciation of the subject matter of the present invention by a person of ordinary skill in the art. Although the drawings represent exemplary embodiments of the invention, the drawings are not necessarily to scale and certain features may be exaggerated or omitted in order to better illustrate and explain the present invention.

The present invention relates to a method for processing a multi-touch input. Exemplary embodiments of the present invention provide a method for eliminating a mistaken recognition of a transiently and partially overlapped portion of quick and continuous touch inputs in a touch screen of a resistive overlay type, for example, which cannot inherently recognize a simultaneous multi-touch occurring thereon. Therefore, the present invention reduces unexpected input errors caused by quick touch inputs and allow a reliable multi-touch input on such a touch screen, thus finally permitting a user's quick input action.

Among terms set forth herein, a "touch" refers to the act or an instance when a user applies pressure on a touch screen through his or her finger or by using a stylus pen, and can also include placing the finger or stylus pen within a predetermined distance of the screen sufficient to be recognized as a touch selection. A "multi-touch" refers to the act or an instance when such a touch occurs simultaneously at two or more different points on a touch screen. A "touch release" refers to the act or an instance when a user removes pressure from a touch screen in order to separate his or her finger or a stylus pen from the touch screen.

Now, described hereinafter are exemplary embodiments of the present invention wherein a multi-touch input is properly processed by a mobile device having a touch screen which is incapable of recognizing a simultaneous multi-touch occurring thereon. The embodiments given below are, however, exemplary only and not to be considered as a limitation of the presently claimed invention. As will be understood by those skilled in the art, any other exemplary embodiments or variations are possible.

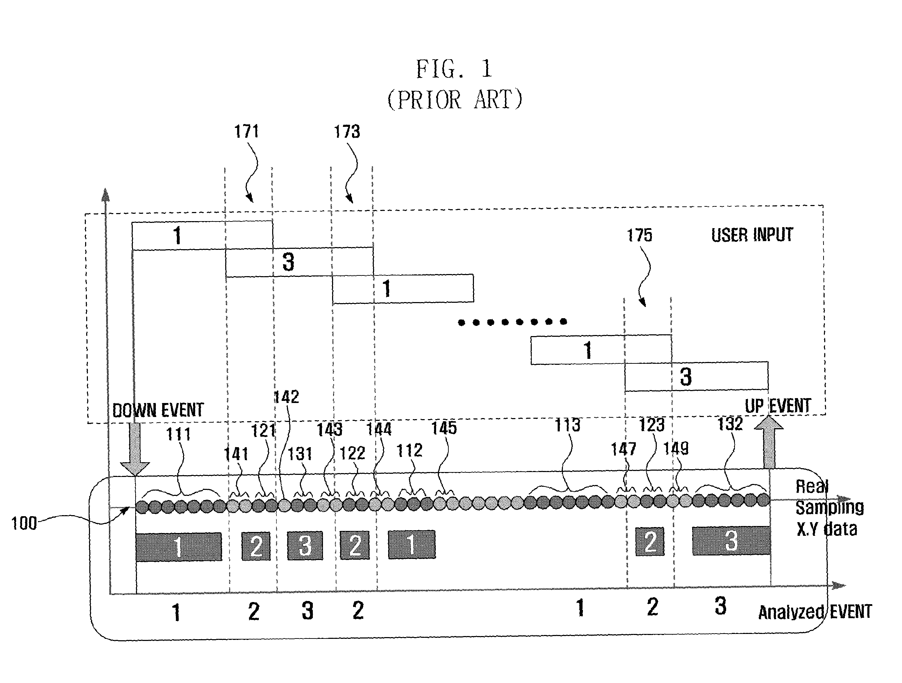

FIG. 1 illustrates the output of event data in a case where two points are simultaneously touched in a conventional mobile device having a touch screen of a resistive overlay type.
FIG. 1 exemplarily shows the response to the first and second touches being successively inputted in a certain input mode of a conventional mobile device. Particularly, FIG. 1 assumes that the second touch is inputted before the first touch is released. More particularly, a transiently and partly overlapped multi-touch input may occur in this case. Meanwhile, an input mode refers to any particular state of a mobile device where a selected function or application, such as a dialing, a short message service (SMS), a multimedia message service (MMS), a memo, an e-mail, etc., is activated or enabled and allows a user to input a variety of letters and numbers.

Referring now to FIG. 1, two points on a touch screen of a resistive overlay type are successively pressed through a user input. More particularly, the touch screen offers thereon a virtual keypad having the arrangement of numerical keys, and then a user touches successively and repeatedly two number points 1 and 3 in the virtual keypad. In this particular case, the user inputs of two numbers are frequently overlapped. Namely, a multi-touch input can occur unexpectedly and often unintentionally with the resistive overlap type of touch pad, as touch pads of this type do not operate according to multi-touch operations. When such input events happen, the mobile device periodically reads and analyzes event data and then outputs the analyzed event data.

In the conventional device as shown in FIG. 1, the numbers 1 and 3 express that two numerical keys 1 and 3 in the virtual keypad are successively and repeatedly touched through a user input. Also, each of reference numbers 171, 173 and 175 indicates the section of a multi-touch input, that is, a transient state in which two number points 1 and 3 are sensed by the touch screen as being simultaneously (overlappingly) touched.

A reference number 100 indicates event data delivered from the touch screen in accordance with a user input. While a certain numerical key in the virtual keypad is touched, the mobile device receives event data on a touched point at given periods (e.g., 25ms). That is, the reference number 100 shows sampling coordinate data (namely, x and y data) depending on a user input.

With continued reference to FIG. 1, each of the reference numbers 111, 112 and 113 indicates event data recognized at given periods by the mobile device while a numerical key 1 is touched in the virtual keypad on the touch screen. Similarly, each of the reference numbers 131 and 132 indicates event data recognized at given periods by the mobile device while a numerical key 3 is touched in the virtual keypad on the touch screen. Each of the reference numbers 121, 122, 123, 141, 142, 143, 144, 145, 147 and 149 indicates event data recognized at given periods by the mobile device while numerical keys 1 and 3 are simultaneously touched in the virtual keypad on the touch screen, that is, event data from the respective sections 171, 173 and 175 of a multi-touch input.

Normally, a user who intends to successively input numbers 1 and 3 touches first a numerical key 1 in the virtual keypad. Therefore, a touchdown event occurs on a numerical key 1. Herein, a numerical key 1 refers to a specific key area to which a number 1 is assigned. Then a user releases a touch from a numerical key 1 and touches a numerical key 3 in the virtual keypad. Therefore, a touchup event occurs on a numerical key 1, and a new touchdown event occurs on a numerical key 3.

However, as shown in FIG. 1, in the conventional device, when a user touches quickly and successively numerical keys 1 and 3 through his or her two fingers, for example, such keys are often simultaneously touched as indicated by the aforesaid reference numbers 171, 173 and 175. That is, two touchdown events occur at the same time on different touch points. In this case, the touch screen of a resistive overlay type fails to read any value of touch points or mistakenly recognizes that a touch event occurs on any other point (e.g., an intermediate point between both numerical keys 1 and 3). Therefore, the mobile device regards such touchdown events as an error or outputs wrong data other than user's desired data. Examples of such errors or outputs of wrong data are indicated by the aforesaid reference numbers 121, 122, 123, 141, 142, 143, 144, 145, 147 and 149.

Specifically, when a user touches quickly, successively and repeatedly two numbers 1 and 3, such as, for example 1, 3, 1, 3, etc., a numerical key 3 may be often touched before the preceding touch is completely released from a numerical key 1. While such situations are repeated, the touch screen has no state of a touch release and is always in any touch state. Therefore, event data (i.e., coordinate data) recognized by the mobile device until the last touch is released may come to include not only a number 1 of a touched numerical key 1 and a number 3 of a touched numerical key 3, but also a number 2 of a non-touched numerical key 2 located between touched numerical keys 1 and 3 and any other unexpected event data located in the front and rear of a non-touched numerical key 2.

More particularly, the mobile device outputs not only user's desired numbers 1 and 3, but also an unintended number 2 there between. These examples are indicated by the aforesaid reference numbers 121, 122 and 123 in which the number 2 is an unintended output based on overlapped touching of different areas of the touch screen. Additionally, the mobile device may further output any other invalid values in the front and rear of an unintended number 2. These examples are indicated by the aforesaid reference numbers 141, 142, 143, 144, 145, 147 and 149.

Actually, although a user does not physically touch a numerical key 2, but nevertheless the mobile device mistakenly recognizes and then outputs a number 2 which is event data assigned to a numerical key 2 as indicated by 121, 122 and 123, or any other invalid data in the front and rear of a numerical key 2 as indicated by 141, 142, 143, 144, 145, 147 and 149. In other words, although a user does not touch a numerical key 2, a display unit of the mobile device may output unintended data such as a number 2 or no data in some section such as the front and rear of a number 2. Therefore, until the last touchup event happens, namely, until the last touch is released, the mobile device outputs on the display unit a series of event data like 1, 2, 3, 2, 1, 2, 3, 2, 1, etc. including improper data not intended by a user.

As discussed heretofore, a conventional mobile device such as in FIG. 1 having a touch screen of a resistive overlay type may often fail to determine how event should be processed in such cases as stated above, and therefore may output wrong data different from real data based on a user input.

Accordingly, a typical touch screen which is inherently incapable of recognizing a multi-touch input, such as a touch screen of a resistive overlay type, can process only a single touch event at a time. That is, when a multi-touch input occurs, a traditional touch screen comes to wrongly recognize a multi-touch as a single touch on an intermediate point between two points of a multi-touch. In other words, when a second touch input occurs while a first touch input still remains on the touch screen, the touch screen fails to correctly recognize such touch events or mistakenly recognizes a multi-touch as a touch on any other point. In the end, unlike the user's intention, wrong letters or numbers are sometimes inputted.

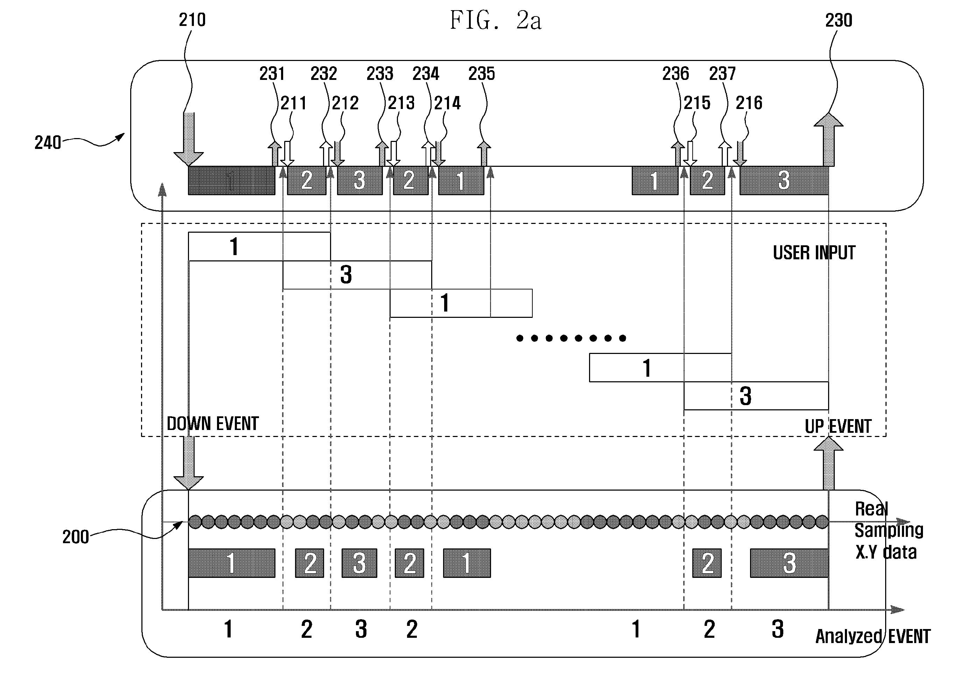

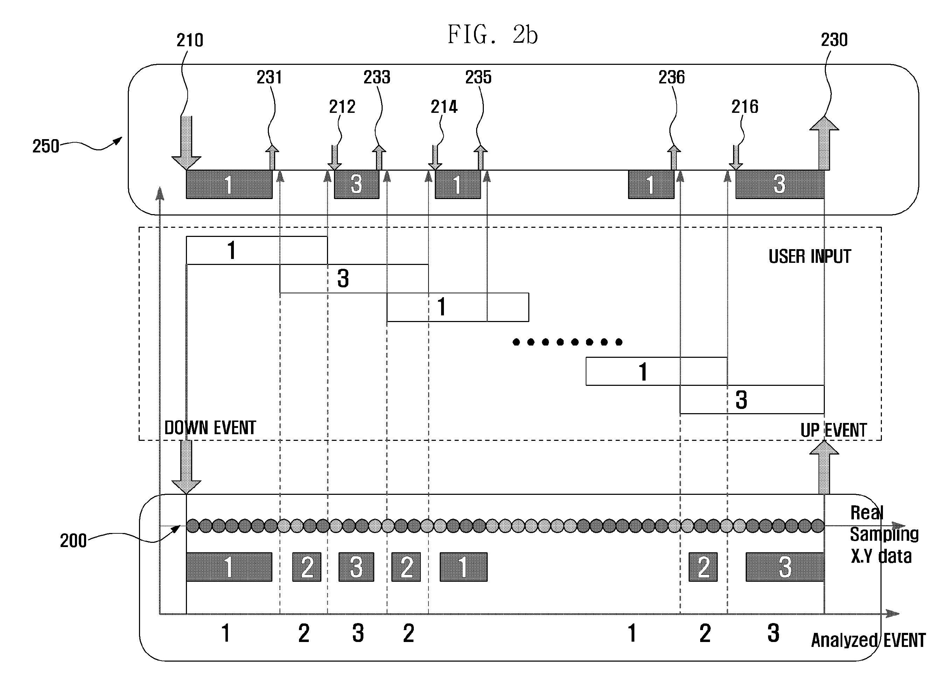

FIGS. 2a and 2b are conceptualized views which illustrate the output of event data in a case where two points are simultaneously touched in a mobile device in accordance with an exemplary embodiment of the present invention.

FIGS. 2a and 2b exemplarily show a case where the first and second touches are successively input in a certain input mode of a mobile device. Particularly, it is supposed in FIGS. 2a and 2b that the second touch is input before the first touch is released. In this particular case, the mobile device according to an exemplary embodiment of the present invention creates a virtual event and thereby makes a distinction between valid data and invalid data. Then the mobile device does not output an event data with regard to invalid data, and outputs an event data only with regard to valid data. This creation of a virtual event may allow a correct input according to user's intention, and FIGS. 2A and 2B illustrate related operation. In exemplary embodiments of the present invention, an input mode refers to any particular state of a mobile device where a selected function or application, such as a dialing, a short message service (SMS), a multimedia message service (MMS), a memo, an e-mail, etc., is activated or enabled and allows a user to input a variety of letters and numbers.

Referring now to FIGS. 2a and 2b, two points on a touch screen of a resistive overlay type are successively pressed through a user input. That is, the touch screen offers thereon a virtual keypad having the arrangement of numerical keys, and then a user touches successively and repeatedly two number points 1 and 3 in the virtual keypad. In this case, user inputs of two numbers are frequently overlapped. Namely, a multi-touch input occurs unexpectedly. When such input events happen, the mobile device periodically reads and analyzes event data and then outputs the analyzed event data. In particular, regarding an input event occurring by a multi-touch input, the mobile device distinguishes valid data from invalid data and outputs only valid data.

In a description about FIGS. 2a and 2b, the repetition of the same as earlier described with reference to FIG. 1 will be avoided. For instance, a reference number 200 in FIGS. 2a and 2b corresponds to the aforesaid reference number 100 in FIG. 1, and therefore a description about that will be omitted hereinafter.

In FIG. 2a, a reference number 240 indicates an instance of distinguishing valid data from invalid data through virtual events. In FIG. 2b, a reference number 250 indicates an instance of processing valid data and invalid data wherein the output of event data is performed only for valid data, excluding invalid data.

In FIGS. 2a and 2b, a reference number 210 indicates a real touchdown event which physically occurs on a particular key in the virtual keypad. Specifically, the reference number 210 indicates the instant when the mobile device recognizes a touchdown event caused by a user's initial touch which occurs on any point in key areas of the virtual keypad.

Also, a reference number 230 indicates a real touchup event which physically occurs on a particular key in the virtual keypad. Specifically, the reference number 230 indicates the instant when the mobile device recognizes a touchup event caused by the release of all touches from at least one point in key areas of the virtual keypad.

Meanwhile, reference numbers from 211 to 216 and from 231 to 237 indicate virtual events. Specifically, each of the reference numbers from 211 to 216 indicates a virtual touchdown event, and each of the reference numbers from 231 to 237 indicates a virtual touchup event. Such virtual events are imaginarily created to distinguish valid data when a multi-touch input occurs in the virtual keypad.

As shown in FIGS. 2a and 2b, when a user touches quickly and successively numerical keys 1 and 3, such keys are often simultaneously touched. In this case, the mobile device creates virtual touchdown events 211 to 216 and virtual touchup events 231 to 237.

Referring now to FIG. 2a, shown herein is a state where the second touchdown event (e.g., a touchdown event on a numerical key 3) occurs while the first touchdown event (e.g., a touchdown event on a numerical key 1) is maintained. In this state, when numerical keys 1 and 3 are pressed together, invalid data is distinguished from valid data through virtual events. Therefore, the mobile device can recognize invalid data as well as valid data in response to a user input, like 1, 2, 3, 2, 1, •••, 1, 2, 3.

Next, referring now to FIG. 2b, shown herein is a state where invalid data distinguished through virtual events is eliminated and valid data only is outputted on a display unit. That is, in this state, the mobile device eliminates invalid data from all event data, depending on virtual touchup and touchdown events. Therefore, the mobile device can output valid data only, like 1, 3, 1, 3, ···, 1, 3. That is, the mobile device can display real data only actually inputted by a user.

More specifically, when a real touchdown event 210 occurs, the mobile device begins to read and analyze data which is delivered from the touch screen. Then such read and analysis are repeated at given periods (e.g., 25ms, 4ms, etc.). That is, the mobile device obtains sampling data of a real touchdown event 210 in a predetermined sampling cycle.

As indicated by reference number 200, a great number of sampling data can be periodically obtained from a real touchdown event 210 to a real touchup event 230. Depending on some parameters of such sampling data, the mobile device can determine whether or not a particular touch point is pressed for a long time or any continuous variation has taken place. This determination may be based on several parameters such as distance, gradient, distribution, etc. of sampling data.

As discussed heretofore, the mobile device according to an exemplary embodiment of the present invention creates a virtual touchdown event and a virtual touchup event in a multi-touch input section. Depending on such virtual events, the mobile device makes a distinction between valid data and invalid data. Then the mobile device removes invalid data without outputting and outputs valid data only. It is therefore possible for a user to quickly input desired letters and/or numbers by both hands. For instance, the mobile device of the present invention may output valid data only through the following processing: (real touchdown, move, move, ..., move, virtual touchup), (virtual touchdown, move, move, ..., move, virtual touchup), ···, (virtual touchdown, move, move, •••, move, real touchup). Related filtering operation using virtual touchdown and touchup events will be described hereinafter.

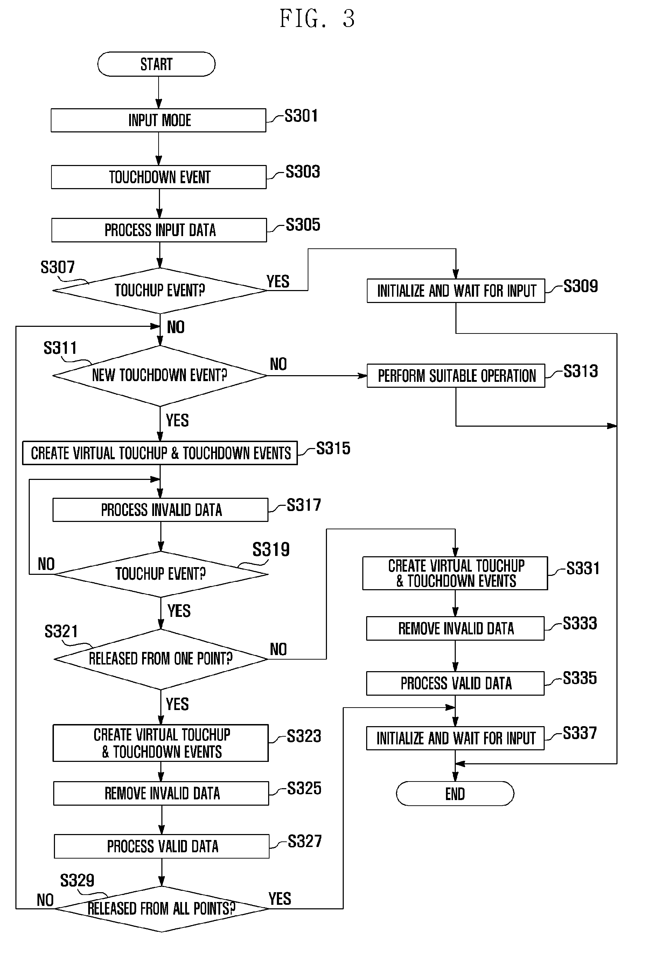

FIG. 3 is a flow diagram which illustrates exemplary operation of a method for processing a multi-touch input in a mobile device in accordance with an exemplary embodiment of the present invention.

Referring now to FIG. 3, at the outset, at step (S301), the mobile device activates a certain input mode at a user's request. For instance, the mobile device may execute any input function in connection with a dialing, a short message service (SMS), a multimedia message service (MMS), a memo, an e-mail, etc. Additionally, the mobile device may display a virtual keypad and a display window on a touch screen. Described hereinafter is a case of inputting numbers through the virtual keypad. This case is, however, exemplary only and not to be considered as a limitation of the present invention. As will be understood by those skilled in the art, the present invention may be also be applied to any other cases of inputting native letters, English letters, special letters, or other types of letters or symbols, alphanumeric, graphic, or otherwise.

Next, at step (S303) after detecting a touchdown event in an input mode, at step (S305) the mobile device processes data in a prearranged procedure. More particularly, in step S305, the mobile device reads and analyzes data produced by the detected touchdown event. Specifically, when a user touches a particular point of the virtual keypad in order to input a desired letter or number, the mobile device receives coordinate data on the touched point from the touch screen. Then the mobile device stores the received coordinate data, for example, in the first buffer among three buffers and also displays information corresponding to the received coordinate data on a display window.

Next, at step (S307) the mobile device determines whether or not a touchup event occurs. More particularly, the mobile device determines whether or not the existing touch causing the touchdown event in the previous step S303 is released from the touch screen. If the determination of the touchdown event is affirmative, if a touchup event occurs, then at step 309 the mobile device initializes a process and waits for the next input while keeping the displayed information.

If the determination at step (S307) is not affirmative (no), namely, if any touchup event does not occur, then at step (S311) the mobile device further determines whether a new touchdown event occurs. That is, while the above touchdown event remains on a particular point, the mobile device detects a new touchdown event on another point. Namely, this step is to determine whether a multi-touch input arises.

If there is no new touchdown event in the step S31 1 , then at step (S313) the mobile device may perform a predetermined operation. For instance, the mobile device may merely maintain the displayed information on the touch screen by treating sampling data of the existing touchdown event as move until other related action such as a touch release occurs. If any function based on a long press is predefined, the mobile device may perform a predefined function assigned to a long pressed key. Here, the mobile device determines a long press when the existing touchdown event is maintained for a given time. Additionally, a function based on a long press may comprise a shortcut dialing, an automatic shift of displayed data, and so forth.

If there is any new touchdown event in the step S31 1, meaning that if a multi-touch input arises due to a new touchdown event, then at step (S315) the mobile device creates a virtual touchup event and a virtual touchdown event. Particularly, in this step, the mobile device completes an input of the existing data (i.e., valid data produced by the previous touchdown event in the step S303) through a virtual touchup event and then initiates an input of new data (i.e., invalid data) through a virtual touchdown event. Here, this invalid data is an intermediate value between two points of the previous touchdown event and a new touchdown event. At step (S317), the invalid data is processed in a prearranged procedure. In other words, the invalid data is temporarily stored in the second buffer among three buffers without being displayed. Related examples will be described in detail later.

Next, at step (S319) the mobile device determines whether or not a touchup event occurs. If no touchup event occurs, the mobile device returns to the previous step (S317) and continues to process invalid data as discussed above. In other words, invalid data is accumulated in the second buffer.

If any touchup event occurs, at step (S321) the mobile device further determines whether a touchup event occurs on one or two of the touch points. Here, the touch points are places where touchdown events occur respectively in the previous steps (S303) and (S311).

If it is determined in the step (S321) that a touchup event occurs on one touch point, at step (S323) the mobile device creates again a virtual touchup event and a virtual touchdown event. Particularly, in this step, the mobile device completes an input of the existing data (i.e., invalid data produced by the previous virtual touchdown event in the step S315) through a virtual touchup event and then initiates an input of new data (i.e., valid data) through a virtual touchdown event. Here, invalid data produced by the previous virtual touchdown event is temporarily and accumulatively stored in the second buffer and new valid data produced by the current virtual touchdown event is stored in the third buffer among three buffers.

Next, at step (S325) the mobile device removes invalid data from the second buffer and at step (S327) processes the valid data stored in the third buffer in a prearranged procedure. That is, in the step (S327), the mobile device reads valid data from the third buffer and then displays it on a display window.

Next, at step (S329) the mobile device determines whether another touchup event occurs on the other point. That is, after a touch is released from one of two touch points in the previous step (S321), the mobile device determines whether another touch is released from the other touch point in this step. If another touchup event occurs, namely, if all touches are released from their points, the mobile device performs a subsequent step (S337) to be discussed later. However, if another touchup event does not occur, the mobile device returns to the previous step (S311).

On the other hand, if it is determined at step (S321) that a touchup event occurs on a two-touch point, then at step (S321) the mobile device creates again a virtual touchup event and a virtual touchdown event. Particularly, in this step, the mobile device completes an input of the existing data (i.e., invalid data produced by the previous virtual touchdown event in the step S315) through a virtual touchup event and then initiates an input of new data (i.e., valid data) through a virtual touchdown event. Here, invalid data produced by the previous virtual touchdown event is temporarily and accumulatively stored in the second buffer and new valid data produced by the current virtual touchdown event is stored in the third buffer among three buffers.

Next, at step (S333) the mobile device removes invalid data from the second buffer and processes valid data stored in the third buffer in a prearranged procedure (step S335). For example, in step S335, the mobile device reads valid data from the third buffer and then displays the valid data on a display window.

Next, at step (S337) while continuing to display valid data in the third buffer, the mobile device initializes a process and waits for the next input.

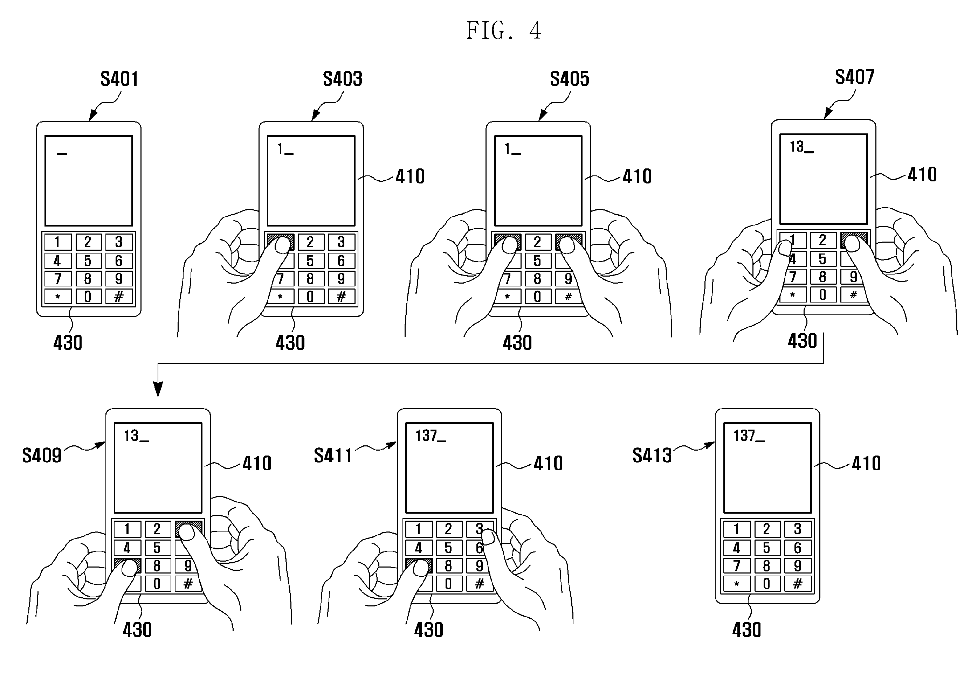

FIG. 4 illustrates a process of a multi-touch input on a touch screen of a resistive overlay type in accordance with an exemplary embodiment of the present invention.

Referring now to FIG. 4, when a selected input mode (e.g., dialing, SMS, MMS, memo, e-mail, etc.) is activated, the mobile device displays a virtual keypad 430 at one portion of a touch screen and a display window 410 at the other portion, as indicated by a reference number S401. In FIG. 4, it is supposed that the virtual keypad 430 has the arrangement of numerical keys for allowing an input of numbers. Of course, the virtual keypad 430 may have any other type of arrangement.

Next, as indicated by a reference number S403, a user touches a numerical key 1 in the virtual keypad 430 with the left hand. Then the mobile device receives the coordinate value of a touched point from the touch screen and stores the coordinate value in the first buffer. Also, the mobile device displays a number 1 corresponding to the received coordinate value on the display window 410.

Next, as indicated by a reference number S405, a user touches a numerical key 3 in the virtual keypad 430 with the right hand before releasing the left hand from a numerical key 1. Then the mobile device receives the coordinate value (namely, invalid data) of an intermediate point between numerical keys 1 and 3 from the touch screen and stores it in the second buffer. The mobile device regards the received coordinate value as invalid data and does not display a corresponding number 2 on the display window 410. Of course, the position of the hands, and whether it is two fingers of one hand or a respective finger of each hand touching the keypad makes no difference with regard to the inadvertent multi-touch.

Next, as indicated by a reference number S407, a user releases the left hand from a numerical key 1. Then the mobile device receives the coordinate value of a touched point (namely, still touched with the right hand) from the touch screen and stores it in the third buffer. Also, the mobile device displays a number 3 corresponding to the received coordinate value on the display window 410. That is, if the first touched point is released from a touch while two points are touched, the mobile device regards data of the second touched point as valid data to be stored and displayed.

In addition, the mobile device removes data (namely, a number 2), particularly data stored in the second buffer. Then the mobile device enables the third buffer to act as the original first buffer and is ready to receive the next input. More particularly, the first, second and third buffers may shift one-by-one. That is, when the third buffer operates like the original first buffer, the first buffer acts as the original second buffer, and the second buffer acts as the original third buffer. Such shifts between buffers are not real shifts, but functional shifts which represent storing data in a prearranged order. Related examples will be described later.

Next, with continued reference to FIG. 4, as indicated by a reference number S409, a user touches a numerical key 7 in the virtual keypad 430 with the left hand before releasing the right hand from the numerical key 3. Then the mobile device receives the coordinate value (namely, invalid data such as "5") of an intermediate point between numerical keys 3 and 7 from the touch screen and stores the invalid data in the vacant, shifted first buffer. The mobile device regards the received coordinate value as invalid data and does not display a corresponding number 5 on the display window 410.

Next, as indicated by a reference number S411, a user releases the right hand from a numerical key 3. Then the mobile device receives the coordinate value of a touched point (namely, the "7" still touched with the left hand) from the touch screen and stores "7" in the vacant, shifted second buffer. Also, the mobile device displays the number 7 corresponding to the received coordinate value on the display window 410. In other words, as discussed above, if the first touched point is released from a touch while two points are touched, the mobile device regards data of the second touched point as valid data to be stored and displayed.

In addition, the mobile device removes data (namely, a number 5) stored in the shifted first buffer. Then the mobile device enables the third buffer to act as the original first buffer and is ready to receive the next input.

Finally, still referring to FIG. 4, as indicated by a reference number S413, when a user also releases the left hand from a numerical key 7, namely, when all touches are released from the virtual keypad 430, the mobile device initializes a process and waits for the next input. Here, the mobile device may initialize the respective buffers.

As discussed heretofore, the present invention solves a problem so that a multi-touch input results do not result in a wrong display or no display by mistaken recognition of a touch point, thus enhancing user's convenience because of the perceived reduction in errors.

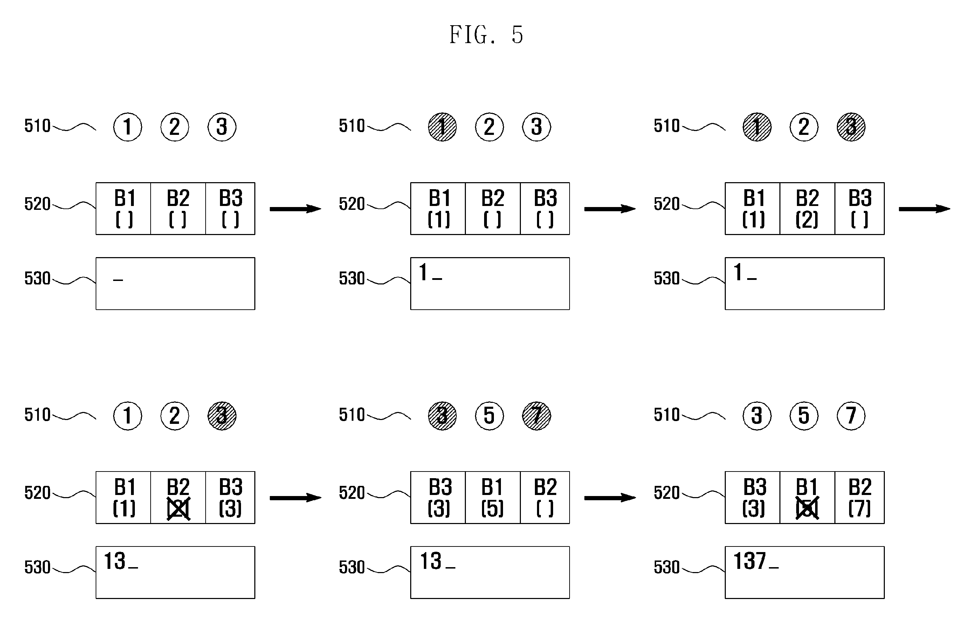

FIG. 5 illustrates a process of a multi-touch input on a touch screen of a resistive overlay type in accordance with another exemplary embodiment of the present invention.

Referring now to FIG. 5, a reference number 510 exemplarily indicates a part of the above-discussed virtual keypad 430. Also, a reference number 520 indicates three buffers and their states of storing data, and a reference number 530 indicates the above-discussed display window 410 and data displayed thereon in response to a user input.

As shown in FIG. 5, at the outset, the first, second and third buffers B1, B2 and B3 are all initialized. Thereafter, if a user touches a numerical key 1 in the virtual keypad 510, the mobile device stores data assigned to a numerical key 1 as valid data in the first buffer B1 and then displays valid data (i.e., a number 1) on the display window 530.

Next, when a user touches a numerical key 3 while still touching a numerical key 1 , the mobile device receives the value of an intermediate point between numerical keys 1 and 3 from the touch screen and treats the received value as invalid data. Also, the mobile device stores invalid data in the second buffer B2 and then does not display invalid data (i.e., a number 2) on the display window 530.

With continued reference to FIG. 5, when a user releases a touch from a numerical key 1 only, the mobile device stores data assigned to a numerical key 3 as valid data in the third buffer B3 and then displays valid data (i.e., a number 3) on the display window 530. Also, the mobile device removes invalid data (i.e., a number 2) stored in the second buffer B2 and then enables the third buffer B3 to act as the original first buffer B1.

As shown in FIG. 5, each buffer shifts one-by-one. Although FIG. 5 depicts buffers as their positions have changed, this depiction is exemplary only for the purpose of illustration. Actually all buffers are capable of storing data by turns without changing their positions. For instance, although the third buffer B3 changes its position from the third place to the first place in FIG. 5, this means a transfer of a data processing position rather than a change of a physical position.

Next, when a user touches a numerical key 7 while still touching a numerical key 3, the mobile device receives the value of an intermediate point between numerical keys 3 and 7 from the touch screen and treats the received value as invalid data. Also, the mobile device stores invalid data in the shifted first buffer B1 and then does not display invalid data (i.e., a number 5) on the display window 530.

Next, when a user releases all touches from both numerical keys 3 and 7, the mobile device stores data assigned to a numerical key 7 as valid data in the shifted second buffer B2 and then displays valid data (i.e., a number 7) on the display window 530. Also, the mobile device removes invalid data (i.e., a number 5) stored in the shifted first buffer B1. In case of all touch releases, the mobile device initializes a process and the respective buffers.

As discussed hereinbefore, the first buffer preferably stores the first data produced by the first touch input, that is, stores valid data produced by a real touchdown event. Also, the first buffer partakes in the event transfer of valid data, that is, displays the first data on the display window.

When the second touch input arises while the first touch input maintained, the mobile device completes an input of the first data through a virtual touchup event and then stores the second data produced by a virtual touchdown event in the second buffer. Also, the mobile device treats the second data as invalid data and then omits the event transfer of invalid data, that is, does not display the second data on the display window.

Thereafter, when the first touch release arises while the second touch input maintained, the mobile device completes an input of the second data through a virtual touchup event and then stores the third data produced by a virtual touchdown event in the third buffer. Also, the mobile device treats the third data as valid data and then displays the third data on the display window through the event transfer. That is, since the second data in the second buffer is invalid data, the mobile device discards the second data and performs the event transfer for the third data only.

Next, when the third touch input arises while the second touch input maintained, the mobile device completes an input of the third data through a virtual touchup event and then shifts the third data from the third buffer to the first buffer. Also, the mobile device stores the fourth data produced by a virtual touchdown event in the second buffer and then treats the fourth data as invalid data.

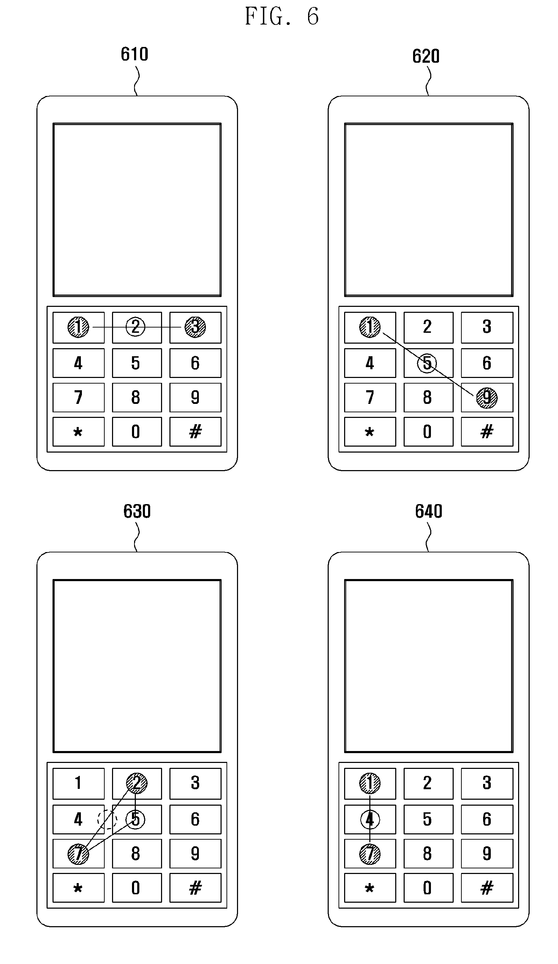

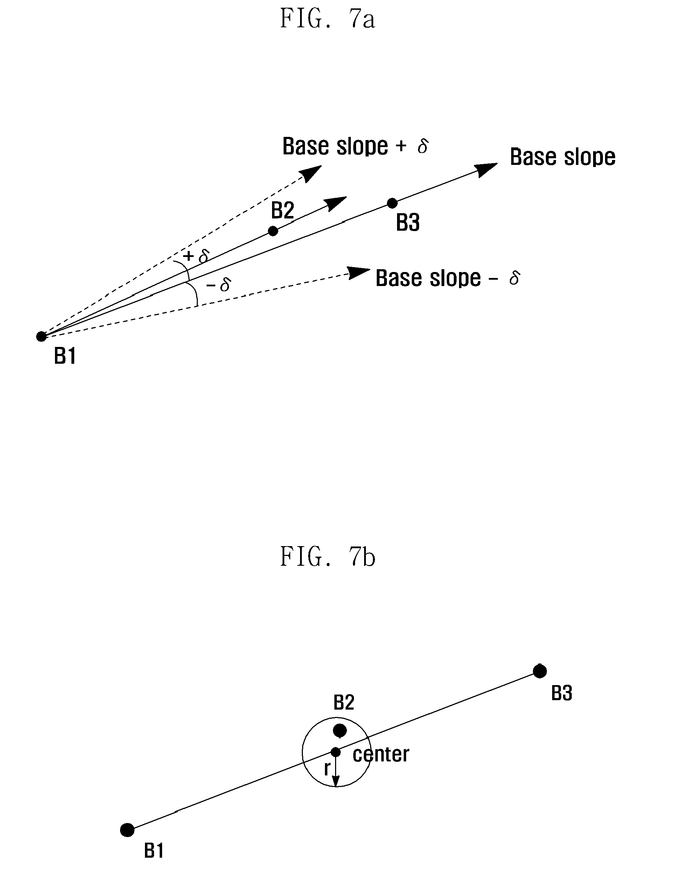

Now, not only the configuration of a multi-touch input that requires creating virtual touchup and touchdown events but also the filtering transaction of valid data and invalid data will now be described through some examples shown in FIGS. 6 and 7.

FIG. 6 illustrates some examples of the configuration of a multi-touch input wherein valid data and invalid data are distinguished by virtual events in accordance with an exemplary embodiment of the present invention.

Referring now to FIG. 6, reference numbers 610, 620, 630 and 640 indicate some examples of the configuration of a multi-touch input that requires creating virtual events. Specifically, in a case where numerical keys 1 and 3 are touched together as indicated by a reference number 610, invalid data (e.g., a number 2) is produced by an intermediate value between both touched keys 1 and 3. Similarly, in another case where numerical keys 1 and 9 are touched at the same time overlapping as indicated by the reference number 620, invalid data (e.g., a number 5) is typically produced as an intermediate value between both touched keys 1 and 9. Also, in still another case where numerical keys 2 and 7 are touched together as indicated by a reference number 630, invalid data (e.g., a number 4 or 5) is produced by an intermediate value between both touched keys 2 and 7. Also, in yet another case where numerical keys 1 and 7 are touched together as indicated by a reference number 640, invalid data (e.g., a number 4) is produced by an intermediate value between both touched keys 1 and 7.

Therefore, according to the above-discussed exemplary embodiment of the present invention, if data produced by a simultaneous touch on two points comprises one of intermediate values between the two points being simultaneous touched, that data is treated as invalid data. Additionally, such invalid data is temporarily stored in the second buffer and then removed.

Meanwhile, data stored in the second buffer is not always treated as invalid data. In some exemplary embodiments of the present invention, the mobile device may perform a process for determining whether data in the second buffer is valid or not. A related example is described hereinafter.

FIGs. 7a and 7b illustrates a method for processing a multi-touch input in a mobile device in accordance with another exemplary embodiment of the present invention.

Referring now to FIGs. 7a and 7b, invalid data is recognized in a section where two points are touched together by continuous user inputs as discussed earlier referring to FIGS. 2a and 2b. At this time, a normal case (a) is to remove invalid data through virtual events and to display only valid data corresponding to a user input.

In addition, there may happen to be another case (b) where the same key is repeatedly touched. For instance, if the second touch input arises on a numerical key 1 while the first touch input is maintained on a numerical key 3. Then the third touch input may occur on a numerical key 3 as soon as the second touch input is released from a numerical key 3.

In this case (b), when the second touch input arises on a numerical key 1 while the first touch input is maintained on a numerical key 3, the mobile device removes invalid data and outputs only valid data through a virtual touchdown event and a virtual touchup event. Specifically, if the second touch is inputted and released soon while the first touch is maintained, the mobile device creates a virtual touchup event 710 and thereby completes inputting data of a numerical key 3. Thereafter, if any new touch input (i.e., the third touch input) arises with the first touch maintained, the mobile device creates a virtual touchdown event 720 and a virtual touchup event 730. Then the mobile device removes invalid data and outputs only valid data. If the above third touch input is what originates from the same numerical key 3 as the second touch input occurs, the mobile device may proceed as followings, depending on setting conditions.

Normally there is not much possibility that a user input will occur successively on the same key area under the circumstances of virtual events. If occurring, such a case may be caused by chattering of coordinate data or any other uncommon reasons. Depending on setting conditions, the present invention may treat such data as invalid data through filtering or alternatively treat such data as valid data.

A case of user input will occur successively on the same key area being treated as invalid data is as follows. A virtual touchdown event 720 may occur soon after a virtual touchup event 710. If a virtual touchdown event 720 occurs on the same point as the preceding input point, the mobile device may discard a current event as doing so for invalid data. That is, if a current event to be treated is not different in content from the preceding event, the mobile device may treat a current event in a way of treating invalid data. For instance, if the preceding event is of concern to a number 3, and if a current event is also of concern to a number 3, the mobile device regards a current event as a duplicate and then discards it.

Accordingly, in a case where a current event and the preceding event have the same content, a current event may be treated as valid data in the above-discussed way or alternatively treated as invalid data. This treatment may depend on setting conditions predefined in the manufacture of the mobile device or adjusted by a user.

Meanwhile, as described hereinbefore, the second buffer among three buffers stores and removes invalid data. That is, when a touch on a particular point is maintained and a new touch is input on another point, the mobile device temporarily stores invalid data produced by a new touch in the second buffer and then removes it.

In addition, contrary to the above-discussed cases, invalid data may not be produced though two points are touched together. That is, although a multi-touch input arises on different points, virtual touchdown and touchup events may not be created in an intermediate point. This case is apt to occur when a user takes quickly an input action with both hands. Described hereinbefore are some ways of treating data stored in the second buffer, depending on whether multi-touch input data (e.g., invalid data) is delivered or not.

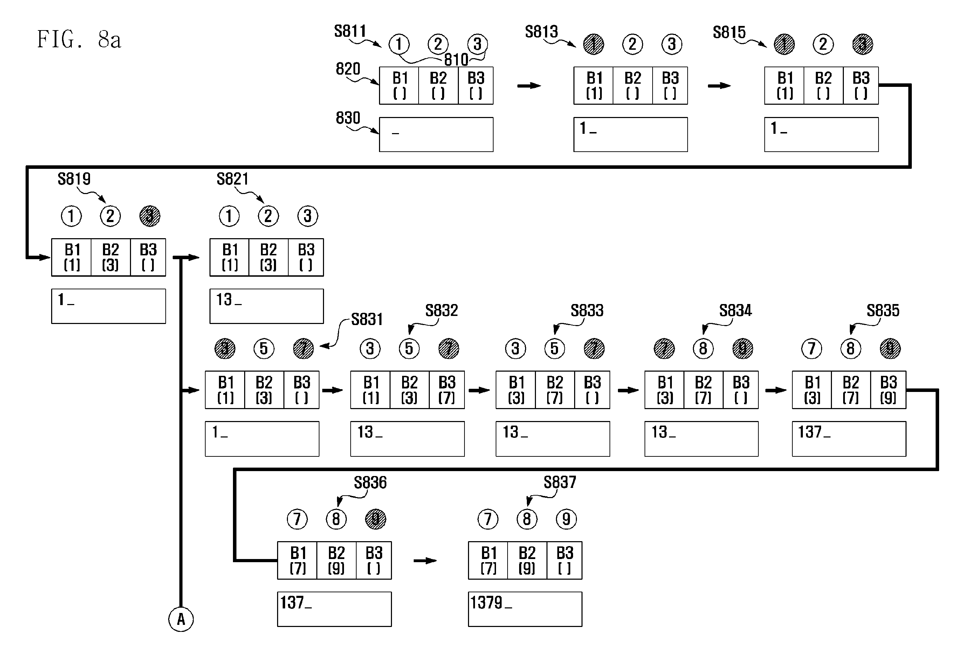

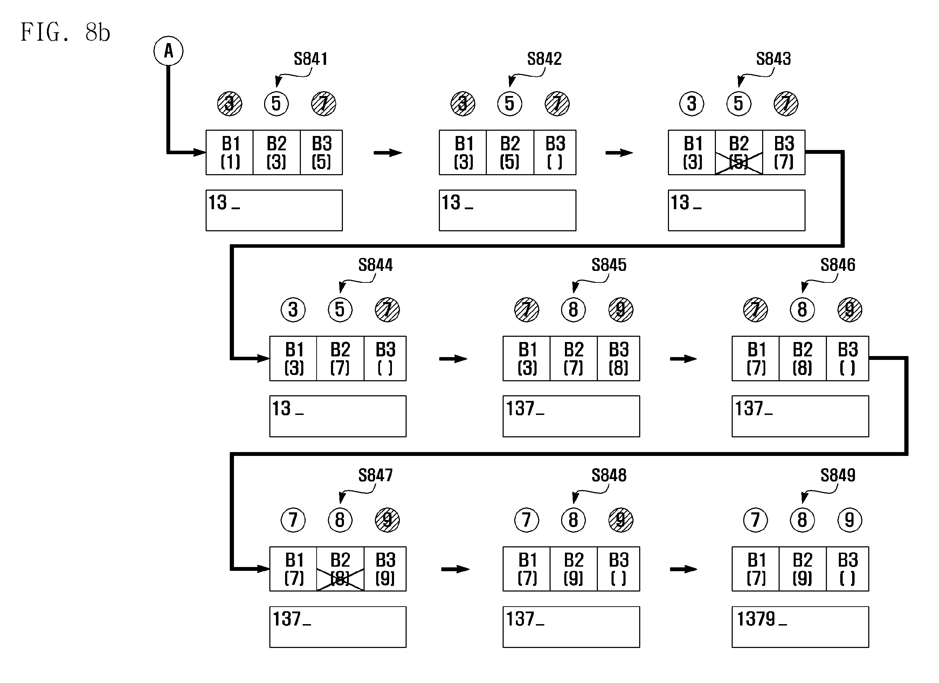

FIGS. 8a and 8b illustrate a process of a multi-touch input on a touch screen of a resistive overlay type in accordance with another exemplary embodiment of the present invention.

Referring now to FIGS. 8a and 8b, a reference number 810 exemplarily indicates a part of the above-discussed virtual keypad 430. Also, a reference number 820 indicates three buffers and their states of storing data, and a reference number 830 indicates the above-discussed display window 410 and data displayed thereon in response to a user input.

As indicated by a reference number S811 in FIG. 8a, at the outset, the first, second and third buffers B1, B2 and B3 are initialized. Thereafter, as indicated by a reference number S813, if a user touches a numerical key 1 in the virtual keypad 810, the mobile device stores data assigned to a numerical key 1 as valid data in the first buffer B1 and then displays valid data (i.e., a number 1) on the display window 830.

Next, as indicated by a reference number S815 in FIG. 8a, a user touches a numerical key 3 while still touching a numerical key 1. Then the mobile device receives the value of an intermediate point between numerical keys 1 and 3 from the touch screen and performs a prearranged procedure shown in FIG. 5. However, such an intermediate value may not be delivered as indicated by a reference number S815. In this case, as indicated by a reference number S819, if a user releases a touch from a numerical key 1 while touching a numerical key 3, the mobile device creates data assigned to a numerical key 3 through virtual touchup and touchdown events and then stores it in the second buffer B2. At this time, this data (i.e., a number 3) is not yet displayed on the display window 830.

As indicated by S819 in FIG. 8a, the mobile device has three subsequent options. Specifically, a reference number S821 indicates the first option, namely, a case where all touches are released. Reference numbers from S831 to S837 indicate the second option, namely, a case where an intermediate value is not yet produced in spite of the occurrence of the next multi-touch input. Reference numbers from S841 to S849 (FIG. 8b) indicate the third option, namely, a case where an intermediate value is produced by the next multi-touch input.

Now, the first option will be described in detail with reference to FIG. 8b.

As indicated by a reference number S821, a user may release a touch from a numerical key 3. That is, all touches are released. Then the mobile device treats data (i.e., a number 3) stored in the second buffer B2 as valid data, depending on a virtual touchup event, and displays a number 3 on the display window 830.

Next, the second option will be described in detail with continued reference to FIG. 8b.

As indicated by a reference number S831, a user may touch a numerical key 7 while still touching a numerical key 3. In this case, no change occurs in the buffers 820 and the display window 830 until the touch screen delivers virtual events of concern to an intermediate value between numerical keys 3 and 7. Then, as indicated by a reference number S832, if a user releases a touch from a numerical key 3 while touching a numerical key 7, the mobile device creates data assigned to a numerical key 7 through virtual touchup and touchdown events and then stores it in the third buffer B3.

Also, by using data stored in the first and third buffers B1 and B3, the mobile device determines whether or not data in the second buffer B2 is valid. If the second buffer B2 stores valid data, the mobile device treats data (i.e., a number 3) stored in the second buffer B2 as valid data and then, as indicated by a reference number S832, displays a number 3 on the display window 830.

Next, as indicated by a reference number S833, the mobile device performs a data shift from the second and third buffers to the first and second buffers. That is, after clearing the first buffer B1, the mobile device transfers data (i.e., a number 3) stored in the second buffer B2 to the first buffer B1 and also transfers data (i.e., a number 7) stored in the third buffer B3 to the second buffer B2. Although FIGS. 8a and 8b depict a shift of data, this is exemplary only for the purpose of illustration.

Next, as indicated by a reference number S834, a user may touch a numerical key 9 while still touching a numerical key 7. In this case, no change occurs in the buffers 820 and the display window 830 until the touch screen delivers virtual events of concern to an intermediate value between numerical keys 7 and 9. Then, as indicated by a reference number S835, if a user releases a touch from a numerical key 7 while touching a numerical key 9, the mobile device creates data assigned to a numerical key 9 through virtual touchup and touchdown events and then stores it in the third buffer B3.

Also, by using data (i.e., numbers 3 and 9) stored in the first and third buffers B1 and B3, the mobile device determines whether data (i.e., a number 7) in the second buffer B2 is valid. If the mobile device determines that the second buffer B2 stores valid data, the mobile device treats data (i.e., a number 7) stored in the second buffer B2 as valid data and then, as indicated by a reference number S835, displays a number 7 on the display window 830.

Next, still referring to FIG. 8a, as indicated by a reference number S836, the mobile device performs again a data shift. For example, after clearing the first buffer B1, the mobile device transfers data (i.e., a number 7) stored in the second buffer B2 to the first buffer B1 and also transfers data (i.e., a number 9) stored in the third buffer B3 to the second buffer B2. Then, as indicated by a reference number S837, if a user releases a touch from a numerical key 9, the mobile device displays a number 9 on the display window 830 through the same process as from S819 to S821.

Now, the third option will be described in more detail.

As indicated by a reference number S841 in FIG. 8b, a user may touch a numerical key 7 while still touching a numerical key 3. In this case, if the touch screen delivers an intermediate value between numerical keys 3 and 7, the mobile device stores the delivered intermediate value in the third buffer B3.

Also, by using data (i.e., numbers 1 and 5) stored in the first and third buffers B1 and B3, the mobile device determines whether data (i.e., a number 3) in the second buffer B2 is valid. If the second buffer B2 stores valid data, the mobile device treats data (i.e., a number 3) stored in the second buffer B2 as valid data and then, as indicated by a reference number S841, displays a number 3 on the display window 830.

Next, as indicated by a reference number S842, the mobile device performs a data shift from the second and third buffers to the first and second buffers. In other words, after clearing the first buffer B1, the mobile device transfers data (i.e., a number 3) stored in the second buffer B2 to the first buffer B1 and also transfers data (i.e., a number 5) stored in the third buffer B3 to the second buffer B2.

Then, as indicated by a reference number S843, if a user releases a touch from a numerical key 3 while touching a numerical key 7, the mobile device completes inputting data (i.e., a number 7) in the third buffer B3 in response to virtual events. That is, the mobile device creates data (i.e., a number 7) assigned to a numerical key 7 and then stores it in the third buffer B3.

Also, by using data (i.e., numbers 3 and 7) stored in the first and third buffers B1 and B3, the mobile device determines whether data (i.e., a number 5) in the second buffer B2 is valid. If the second buffer B2 stores invalid data, the mobile device removes data (i.e., a number 5) stored in the second buffer B2. Then, as indicated by a reference number S844, the mobile device performs another data shift. That is, after clearing the second buffer B2, the mobile device transfers data (i.e., a number 7) stored in the third buffer B3 to the second buffer B2.

Meanwhile, subsequent steps indicated by reference numbers from S845 to S848 correspond to the aforesaid steps from S841 to S844, respectively. In addition, steps from S848 to S849 correspond to the aforesaid steps from S819 to S821. Therefore, a description about these steps from S845 to S849 is omitted herein.

Now, a control method in connection with FIGS. 8a and 8b will now be described.

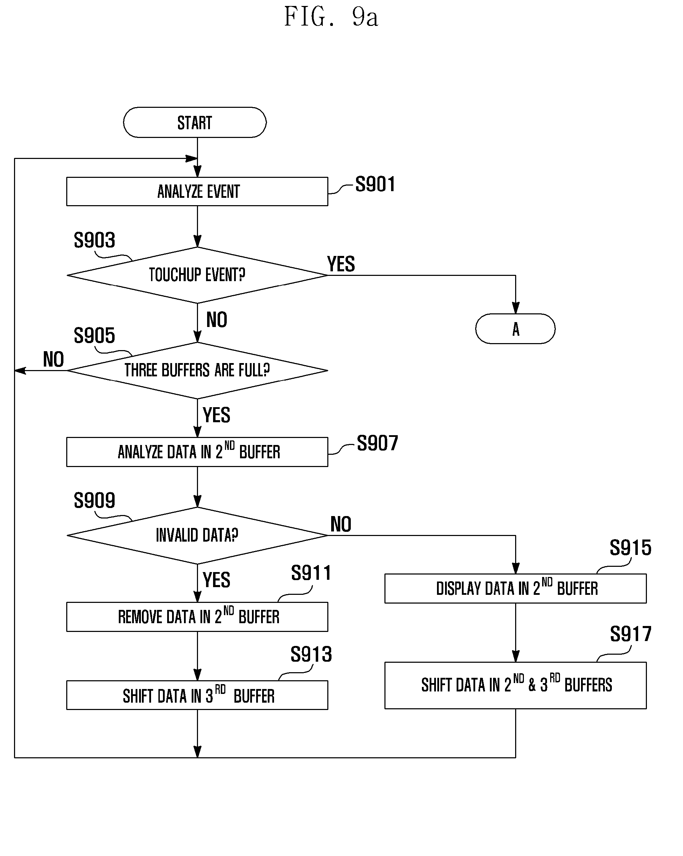

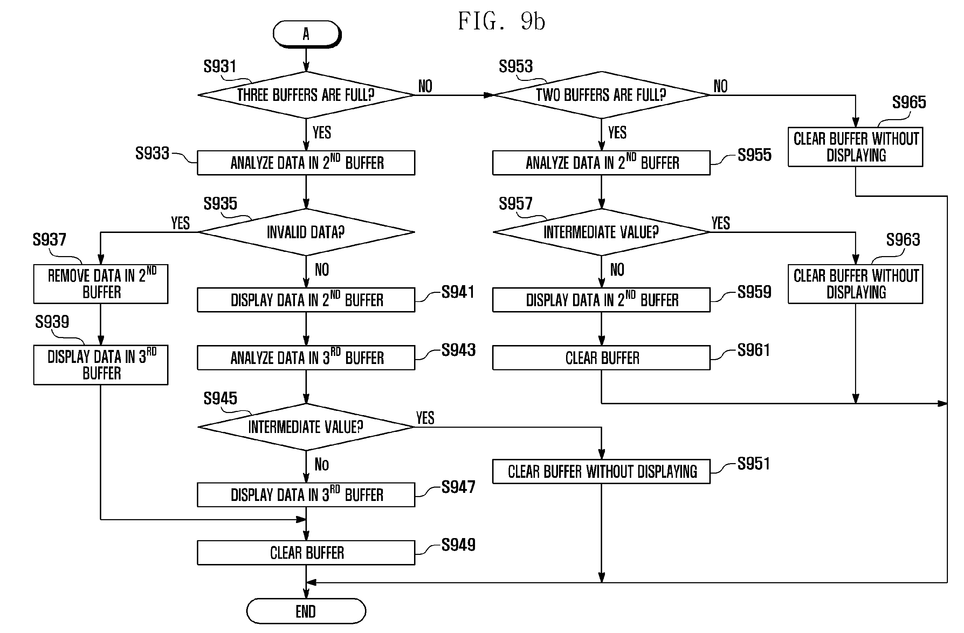

FIGS. 9a and 9b are flow diagrams which illustrate a method for processing an event in connection with FIGS. 8a and 8b. Particularly, FIGS. 9a and 9b show a process of executing subsequent steps after treating an event by an initial user input. For instance, a process shown in FIGS. 9a and 9b starts on the assumption that some data produced by the first touch input is stored in the first buffer and also is displayed on the display window through a related event processing.

Referring to FIGS. 8a to 9b, at the outset, at step (901) the mobile device analyzes a current event which occurs on the touch screen by a user. Through this analysis of a current event, the mobile device determines at step (S903) whether a current event is a real touchup event or not. In this step, a real touchup event means that all touches are released from the touch screen. Also, the other event which is not a real touchup event means a virtual touchup event by which only one touch is released with another touch maintained.

If at step (S903), a current event is not a real touchup event as the result of determination, the mobile device further determines at step (S905) whether all three buffers have already stored data. That is, the mobile device checks whether all of buffers are in a full state. If all buffers are not in a full state, the mobile device returns to the previous step (S901) and continues to analyze subsequent events.

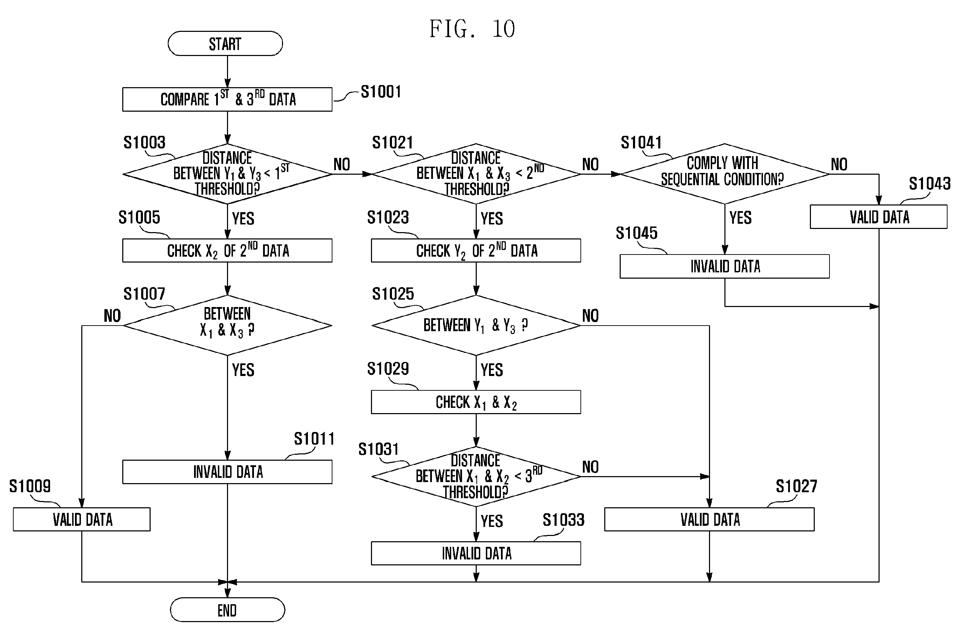

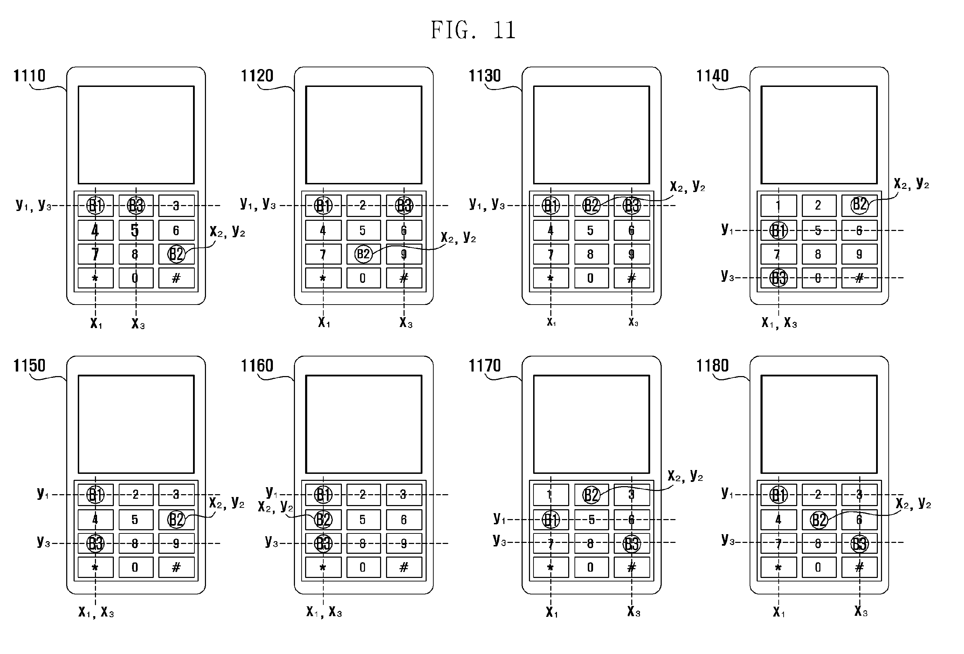

If all buffers are in a full state, then at step (S907) the mobile device analyzes data stored in the second buffer. Through this analysis of data in the second buffer, the mobile device determines whether data in the second buffer is invalid data or not (step S909). These steps S907 and S909 will be more fully described later referring to FIGS. 10 and 11.

If data in the second buffer is invalid data as the result of determination in the step (S909), then at step (S911), the mobile device clears the second buffer, namely, removes the invalid data from the second buffer. At this time, an event processing for invalid data in the second buffer is omitted. That is, invalid data in the second buffer is not displayed on the display window. Then at step (S913), the mobile device performs a data shift for the third buffer. At this time, as discussed before in FIGS. 8a and 8b, data in the third buffer is allowed of no event processing, instead shifted to the second buffer, and awaits all buffers full of data.

However, if data in the second buffer is not invalid data, namely, the data in the second buffer is valid data as the result of determination in the step S909, then at step (S915) the mobile device performs an event processing for data in the second buffer. That is, the mobile device displays valid data stored in the second buffer on the display window. Then at step (S917), the mobile device performs a data shift for the second and third buffers. For instance, data stored in the second buffer is shifted to the first buffer, and data stored in the third buffer is shifted to the second buffer. Alternatively, the mobile device may enable the first buffer to act as the original second buffer, and also enable the second buffer to act as the original third buffer. Thereafter, the mobile device may again perform the aforesaid steps through an analysis of the next event.

On the other hand, if a current event is a real touchup event as the result of determination in step S903, then at step (S931), the mobile device further determines whether all three buffers have already stored data. That is, the mobile device checks whether all of buffers are in a full state.

If all buffers are in a full state as the result of determination in the step S931, then at step (S933), the mobile device analyzes data stored in the second buffer. Through this analysis of data in the second buffer, at step (S935) the mobile device determines whether data in the second buffer is invalid data or not. These steps S933 and S935 will be more fully described later referring to FIGS. 10 and 11.

If data in the second buffer is invalid data as the result of determination in the step S935, then at step (S937) the mobile device clears the second buffer, namely, removes invalid data in the second buffer. At this time, an event processing for invalid data in the second buffer is omitted. That is, invalid data in the second buffer is not displayed on the display window. Then the mobile device performs an event processing for data in the third buffer (step S939). That is, the mobile device displays valid data stored in the third buffer on the display window. Also, the mobile device clears all buffers, namely, initializes buffers (step S949).

However, if data in the second buffer is not invalid data, namely, is valid data as the result of determination in the step S935, then at step (S941) the mobile device performs an event processing for data in the second buffer. That is, the mobile device displays valid data stored in the second buffer on the display window. Then the mobile device analyzes data stored in the third buffer (step S943). Through this analysis, at step (S945) the mobile device determines whether data in the third buffer is an intermediate value or of concern to any point allotted in advance. Specifically, step S945 is performed by comparing data in the third buffer with earlier stored other data values of concern to normal points. If data in the third buffer is located between such data values, it may be determined as an intermediate value.

If data in the third buffer is not an intermediate value as the result of determination in the step S945, the mobile device performs an event processing for data in the third buffer (step S947). That is, the mobile device displays valid data stored in the third buffer on the display window. Also, the mobile device clears all buffers, namely, initializes buffers (step S949).

However, if data in the third buffer comprises an intermediate value as the result of determination in the step S945, at step (S951)the mobile device clears data in the third buffer without any event processing (step S951). That is, the mobile device removes data in the third buffer by treating it as invalid data and then initializes all buffers.

Meanwhile, if all three buffers have not stored data as the result of determination in the step S931, the mobile device further determines whether two of the buffers have already stored data (step S953). More particularly, the mobile device checks whether only two buffers are in a full state.

If two buffers are in a full state as the result of determination in the step S953, the mobile device analyzes data stored in the second buffer (step S955). Through this analysis, the mobile device determines whether data in the second buffer is an intermediate value or of concern to any point allotted in advance (step S957). Specifically, step S957 is performed by comparing data in the second buffer with earlier stored other data values of concern to normal points. If data in the second buffer is located between such data values, then the data in the second buffer may be determined as an intermediate value.

If data in the second buffer does not comprise an intermediate value as the result of determination in the step S957, the mobile device performs an event processing for data in the second buffer (step S959). For example, the mobile device displays valid data stored in the second buffer on the display window. Also, the mobile device clears two buffers, namely, initializes buffers (step S961).

However, if data in the second buffer is an intermediate value as the result of determination in the step S957, the mobile device clears data in the second buffer without any event processing (step S963). That is, the mobile device removes data in the second buffer by treating the data in the second buffer as invalid data and then initializes the two buffers.

On the other hand, if the two buffers are not in a full state as the result of determination in the step S953, then at step (S965) the mobile device clears data in the first buffer without any event processing. That is, the mobile device removes data in the first buffer and then initializes the first buffer.

FIGS. 10 and 11 are a flow diagram and a related example illustrating a method for analyzing valid data and invalid data in connection with FIGS. 8a to 9b.

More particularly, FIGS. 10 and 11 show a process of determining whether data stored in the second buffer is valid or not. In FIG. 11, marks B1, B2 and B3 represent the first, second and third buffers, respectively. For the purpose of illustration, the marks "B1, B2, B3" are mapped with numerical keys of data stored in respective buffers.

First referring to FIG. 10, at the outset, at step (S1001) the mobile device compares the first data stored in the first buffer and the third data stored in the third buffer. This data comparison is performed for the purpose of determining whether the second data stored in the second buffer is valid or not. Each of the first, second and third data stores in their respective buffers may be expressed by x and y coordinate data. The mobile device may, for example, compare distances between any two y-axis data of the first, second and third data with a given threshold. Similarly, the mobile device may compare distances between any two x-axis data of the first, second and third data with a given threshold. Also, the mobile device may determine whether such data correspond to the predefined sequential condition.

In the first place, described hereinafter is a process of comparing the first distance between y-axis data (y₁) of the first data and y-axis data (y₃) of the third data with the first threshold.

Specifically, at step (S1003) the mobile device determines whether the first distance is less than the first threshold. As stated above, the first distance is defined as a distance between y₁ and y₃, and the first threshold is defined as a given particular value used to determine whether the first distance falls within a specific range. Related examples are shown in FIG. 11.

As indicated by reference numbers 1110, 1120 and 1130 in FIG. 11, two y-axis data y₁ and y₃ may have the same value. Therefore, the first distance is about zero. If the first threshold is set to one, the first distance falls within the first threshold. On the other hand, as indicated by reference numbers 1140, 1150, 1160, 1170 and 1180 in FIG. 11, two y-axis data y₁ and y₃ may have different values. Therefore, the first distance is about one or two. When the first distance is two, the first distance falls outside the first threshold.

Referring again to FIG. 10, if at step (S1003) the first distance is less than the first threshold as the result of determination, then at step (1005) mobile device checks x-axis data (x₂) of the second data in the second buffer and then determines at step (S1007) whether x-axis data (x₂) of the second data is located between x-axis data (x₁) of the first data and x-axis data (x₃) of the third data.

If at step (S1007), x₂ is not located between x₁ and x₃ as the result of determination, that is, if x₂ falls outside a range from x₁ to x₃, then at step (S1009) mobile device determines that the second data in the second buffer is valid data. This example is indicated by a reference number 1110 in FIG. 11. As shown, when the first distance between y₁ and y₃ is less than the first threshold and when x₂ is not located between x₁ and x₃, the mobile device treats the second data in the second buffer as valid data and performs an event processing for the second data.

However, if at step (S1007) x₂ is located between x₁ and x₃ as the result of determination, that is, if x₂ falls within a range from x₁ to x₃, then at step (S1011) mobile device determines that the second data in the second buffer is invalid data. This example is indicated by reference numbers 1120 and 1130 in FIG. 11. As shown, when the first distance between y₁ and y₃ is less than the first threshold and when x₂ is located between x₁ and x₃, the mobile device treats the second data in the second buffer as invalid data and omits an event processing for the second data.

In the second place, described hereinafter is a process of comparing the second distance between x-axis data (x₁) of the first data and x-axis data (x₃) of the third data with the second threshold.

Specifically, if the first distance is not less than the first threshold as the result of determination in the aforesaid step (S1003), at step (S1021) the mobile device further determines whether the second distance is less than the second threshold. As stated above, the second distance is defined as a distance between x₁ and x₃, and the second threshold is defined as a given particular value used to determine whether the second distance falls within a specific range. Related examples are shown in FIG. 11.

As indicated by reference numbers 1140, 1150 and 1160 in FIG. 11, two x-axis data x₁ and x₃ may have the same value. Therefore, the second distance is about zero. If the second threshold is set to one, the second distance falls within the second threshold. On the other hand, as indicated by reference numbers 1170 and 1180 in FIG. 11, two x-axis data x₁ and x₃ may have different values. Therefore, the second distance is about one or two. When the second distance is two, the second distance falls outside the second threshold.

Referring again to FIG. 10, if the second distance is less than the second threshold as the result of determination at step (S1021), the mobile device checks y-axis data (y₂) of the second data in the second buffer (step S1023) and then determines whether y-axis data (y₂) of the second data is located between y-axis data (y₁) of the first data and y-axis data (y₃) of the third data (step S1025).

If y₂ is not located between y₁ and y₃ as the result of determination in the step (S1025), that is, if y₂ falls outside a range from y₁ to y₃, the at step (S1027) the mobile device determines that the second data in the second buffer is valid data. This example is indicated by a reference number 1140 in FIG. 11. As shown, when the second distance between x₁ and x₃ is less than the second threshold and when y₂ is not located between y₁ and y₃, the mobile device treats the second data in the second buffer as valid data and performs an event processing for the second data.

However, if y₂ is located between y₁ and y₃ as the result of determination in the step (S1025), that is, if y₂ falls within a range from y₁ to y₃, then at step (S1029) the mobile device checks x-axis data (x₁) of the first data and x-axis data (x₂) of the second data and then determines whether the third distance is less than the third threshold (step S1031). Here, the third distance is defined as a distance between x-axis data (x₁) of the first data and x-axis data (x₂) of the second data, and the third threshold is defined as a given particular value used to determine whether the third distance falls within a specific range. In these steps S1029 and S1031, x-axis data (x₃) of the third data and x-axis data (x₂) of the second data may be alternatively used. Also, the aforesaid first threshold may be used instead of the third threshold.

If the third distance is not less than the third threshold as the result of determination in the step (S1031), the mobile device determines that the second data in the second buffer is valid data (step S1027). This example is indicated by a reference number 1150 in FIG. 11. As shown, when the second distance between x₁ and x₃ is less than the second threshold and when y₂ is located between y₁ and y₃ and further when the third distance between x₁ and x₂ is not less than the third threshold, the mobile device treats the second data in the second buffer as valid data and performs an event processing for the second data.

However, if third distance is less than the third threshold as the result of determination in the step (S1031), the mobile device determines that the second data in the second buffer is invalid data (step S1033). This example is indicated by a reference number 1160 in FIG. 11. As shown, when the second distance between x₁ and x₃ is less than the second threshold and when y₂ is located between y₁ and y₃ and further when the third distance between x₁ and x₂ is less than the third threshold, the mobile device treats the second data in the second buffer as invalid data and omits an event processing for the second data.

In the third place, described hereinafter is a process of determining whether such data correspond to the predefined sequential condition.

Specifically, if the second distance is not less than the second threshold as the result of determination in the aforesaid step (S1021), then at step (S1041) the mobile device further determines whether the first, second and third data complies with the predefined sequential condition. An example of the sequential condition is as follows.

### [Sequential Condition]

When three x-axis data x₁, x₂ and x₃ satisfy one of the following inequalities x₁<x₂<x₃ and x₁>x₂>x₃, corresponding three y-axis data y₁, y₂ and y₃ as well satisfy one of the following inequalities y₁<y₂<y₃ and y₁>y₂>y₃.

Specifically, the mobile device determines whether x-axis data x₁, x₂ and x₃ of the first, second and third data satisfy an inequality x₁<x₂<x₃ and, if yes, further determines whether y-axis data y₁, y₂ and y₃ of them as well satisfy an inequality y₁<y₂<y₃ or y₁>y₂>y₃. Then the mobile device determines whether x-axis data x₁, x₂ and x₃ of the first, second and third data satisfy an inequality x₁>x₂>x₃ and, if yes, further determines whether y-axis data y₁, y₂ and y₃ of them as well satisfy an inequality y₁<y₂<y₃ or y₁>y₂>y₃.

If the first, second and third data does not comply with the above sequential condition as the result of determination in the step S1041, then at step (S1043) the mobile device determines that the second data in the second buffer is valid data. This example is indicated by a reference number 1170 in FIG. 11. As shown, when x-axis data of the first, second and third data satisfies an inequality x₁<x₂<x₃ or x₁>x₂>x₃ and when y-axis data of the first, second and third data satisfies neither y₁<y₂<y₃ nor y₁>y₂>y₃, the mobile device treats the second data in the second buffer as valid data and performs an event processing for the second data. Furthermore, when x-axis data of the first, second and third data satisfies neither x₁<x₂<x₃ nor x₁>x₂>x₃, the mobile device treats the second data in the second buffer as valid data.

However, if the first, second and third data complies with the above sequential condition as the result of determination in the step S1041, at step (S1045) the mobile device determines that the second data in the second buffer is invalid data (step S1045). This example is indicated by a reference number 1180 in FIG. 11. As shown, when x-axis data of the first, second and third data satisfies an inequality x₁<x₂<x₃ or x₁>x₂>x₃ and when y-axis data of the first, second and third data satisfies y₁<y₂<y₃ or y₁>y₂>y₃, the mobile device treats the second data in the second buffer as invalid data and omits an event processing for the second data.

As fully discussed hereinabove, a method for processing a multi-touch input according to the present invention makes it possible to properly recognize a multi-touch input through a software-based technique in a touch screen, such as a resistive overlay type, which cannot recognize inherently a multi-touch input. Therefore, the present invention may reduce unexpected input errors caused by a multi-touch input and thus may permit a user's quick input action.

Also, the present invention may reduce a burden of unnecessary input actions, such as an action of deleting mistaken inputs, by favorably eliminating input errors due to a multi-touch in a touch screen of a resistive overlay type. This may decrease the number of keying and thus may permit a user's quick input action.

Additionally, according to the present invention, a mobile device having a traditional touch screen unavailable for a multi-touch may allow a multi-touch input through cost-effective software upgrade without altering or replacing hardware.

The above-described methods according to the present invention can be realized in hardware or as software or computer code that can be stored in a recording medium such as a CD ROM, a RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While the present invention has been particularly shown and described with reference to an exemplary embodiment thereof, it will be understood by those skilled in the art that various changes in form and details may be made therein without departing from the spirit and scope of the invention as defined by the appended claims.

## Claims

1. A method for processing a multi-touch input, the method comprising:
displaying a first data based on a first touchdown (210) of a touch screen (200);
detecting a second touchdown event (211,212,213) of the touch screen while the first touchdown is maintained;
determining an intermediate data generated on a basis of an overlapping of the first touchdown (210) and the second touchdown (211,212,213) to be invalid data, the intermediate data unexpectedly occurring between the first touch down and the second touchdown;
removing the invalid data when one of the first touchdown and the second touchdown is released (232); and
displaying a second data based on the second touchdown.

2. The method of claim 1, **characterized in that** the first data is stored in a first buffer (B1) and displayed as valid data, wherein the invalid data is stored in a second buffer (B2), wherein the second data is stored in a third buffer (B3), and wherein the second data in the third buffer is shifted to the second buffer after the invalid data is removed.

3. The method of claim 2, **characterized in that** the determining of the intermediate data as invalid data includes distinguishing the invalid data from valid data by creating a virtual touchup event and a virtual touchdown event.

4. The method of claim 3, **characterized in that** the first data is displayed in response to the first touch comprising a real touchdown event (210), wherein the virtual touchup event (232) and the virtual touchdown event (211) are created when the second touchdown is detected while the first touchdown is maintained, wherein an input of the first data is completed in response to the virtual touchup event, wherein the invalid data occurs in response to the virtual touchdown event, wherein the virtual touchup event and the virtual touchdown event are further created when one of the first touchdown and the second touchdown is released, wherein the invalid data is removed in response to the further created virtual touchup event, and wherein the second data is treated as the valid data and displayed in response to the further created virtual touchdown event.

5. The method of claim 4, further comprising:
creating a real touchup event (230) when both of the first touchdown and the second touchdown are released, wherein an input of the second data is completed in response to the real touchup event; and
initializing the first, second and third buffers when both of the first touchdown and the second touchdown are released.

6. The method of claim 2, **characterized in that** the intermediate data occurs between a touch point of the first touchdown (210) and a touch point of the second touchdown (211) when the second touch is detected while the first touch is maintained.

7. The method of claim 2, further comprising:
after one of the first touchdown and the second touchdown is released, detecting a third touch on a released point; and
treating a third data based on the third touchdown as invalid data or valid data depending on setting conditions.

8. The method of claim 1, further comprising:
creating a real touchdown event in response to the first touchdown;
distinguishing the invalid data from valid data by creating a virtual touchup event and a virtual touchdown event when the second touchdown is detected while the first touchdown is maintained; and
creating a real touchup event when both of the first touchdown and the second touchdown are released.

9. The method of claim 6, further comprising:
by using both the first data in the first buffer (b1) and the second data in the third buffer (B3), determining whether data stored in the second buffer is valid or invalid;
if the data stored in the second buffer is invalid, treating the data as invalid data and removing the invalid data; and
if the data stored in the second buffer is valid, treating the data as valid data and performing an event processing.

10. The method of claim 9, **characterized in that** the determining whether the data stored in the second buffer (B2) is valid or invalid includes determining an event type and a buffer state.

11. The method of claim 10, **characterized in that** the determining of the event type and the buffer state includes:
if the event type is not a touchup event and three buffers (B1, B2, B3) are in a full state, determining whether the data in the second buffer (B2) is valid or invalid by using data in the first buffer (B1) and data in the third buffer (B3);
if the data in the second buffer (B2) is invalid, removing the data in the second buffer as invalid data; and
if the data in the second buffer is valid, displaying the data in the second buffer (B2) as valid data.

12. The method of claim 10, **characterized in that** the determining of the event type and the buffer state includes:
if the event type is a touchup event and three buffers (B1, B2, B3) are in a full state, determining whether the data in the second buffer (B2) is valid or invalid by using data in the first buffer and data in the third buffer (B3);
if the data in the second buffer (B2) is invalid, removing the data in the second buffer as invalid data and then shifting the data in the third buffer; and
if the data in the second buffer (B2) is valid, displaying the data in the second buffer as valid data and then shifting both the data in the second buffer and the data in the third data.

13. The method of claim 12, **characterized in that** the determining of the event type and the buffer state further includes:
if the data in the third buffer is the intermediate data, removing the data in the third buffer as invalid data; and
if the data in the third buffer is not the intermediate data, displaying the data in the third buffer as valid data.

14. The method of claim 12, **characterized in that** the determining of the event type and the buffer state further includes:
if the event type is a touchup event and two buffers are in a full state, analyzing the data in the second buffer (B2);
if the data in the second buffer is the intermediate data, removing the data in the second buffer as invalid data; and
if the data in the second buffer is not the intermediate data, displaying the data in the second buffer as valid data.

15. The method of claim 1, further comprising:
storing the first data in a first buffer (B1);
storing the second data in a second buffer (B2);
storing a third data in a third buffer (B3), the third data being based on a third touch inputted while one of the first touch and the second touch is maintained;
by using both the first data in the first buffer and the third data in the third buffer, determining whether the second data in the second buffer is valid or invalid;
if the second data is valid, displaying the second data and then shifting data in both the second buffer and the third buffer; and
if the second data is invalid, removing the second data and then shifting data in the third buffer.
